# EUROPEAN PATENT APPLICATION

(11) **EP 2 202 951 A1**
(43) Date of publication of application: **30.06.2010**
(21) Application number: 08306002.0
(22) Date of filing: 23.12.2008
(51) Int. Cl.: H04M 1/2745, H04M 1/725

(54) **Method and system for creating emergency or important information related to a person**

(71) Applicant: GEMALTO Pte Ltd, Singapore 139941 (SG)
(72) Inventor: Perrinot, Olivier, 329112 Singapore (SG)

(57) **Abstract**

The present invention relates to a method for creating information to be used namely in case of emergency, said information being intended to be stored in a telecommunication device memory and to be retrieved when required;

The method is **characterized in that** it comprises a controlling step (200, 220, 320) for controlling that said information (ICE, EMI) is created in a uniform specific manner and/or for ensuring said information is retrieved when required.

The invention relates also to corresponding computer program and device or system for implementing the same.

## Description

The invention relates to a method and system for creating or storing information.
More particularly, it relates to emergency or important information intended to be stored in a telecommunication device memory and to be retrieved when required.

Among methods for proceeding to the registration or creation of emergency information, the prior art discloses the program ICE (in case of emergency). The ICE program enables first responders, such as paramedics, firefighters, and police officers, to identify victims and contact their next-of-kin to obtain important medical information. It encourages people to enter manually emergency contacts in their cell phone address book under the name "ICE". A person can list multiple emergency contacts as "ICE1", "ICE2", etc.

Despite campaign made for encouraging people to do this there were few results. In fact, research showed that fewer than 25% of people carry with them any details of person to contact following a serious accident (in case those people were unable to speak through injury or illness).

A recommendation E.123 has been issue by the International Telecommunications Union describing analog standardized language-independent way to identify a next-of-kin (or other emergency contact) in a mobile handset's directory, in case of an emergency. It proposes to store emergency contact numbers in the form "0nx", where "n" is a digit from 1 through 9 and "x" is any meaningful descriptive character string in any language or script (e.g. "Anna" or "Spouse"). In the handset's directory, this would be displayed as "01Anna" or "01Spouse" enabling easy identification by the emergency services. The handset's directory entry (in the "contact number" field) would contain the actual number of the person to call in case of emergency.

Despite strong and expensive national communication campaign, previous initiatives and method to enhance the registration of emergency information in the phone did not succeed. The inventor has deduced that since the percentage of people following this recommendation is still low and not significant enough, first responders such as paramedics, firefighters, and police officers does not have the reflex to look after such numbers, to identify victims and contact their next of kin to obtain important medical information.

The invention aims to propose a solution to above problems.

Therefore, a first objective of the invention is to propose an efficient and largely deployed method to realize the creation of information in general linked to a person, namely information of emergency or important information, which leads first responders, to have the reflex to look after and/or to find an access to this information.

A second objective is to ensure that the information will be retrieved or communicated to a recipient.

### Invention object and summary:

To address this problem, the inventor noticed that many people carry mobile phones containing contact number of person they would like to inform following a serious accident or disaster and in case those people were unable to speak through injury or illness. The inventor also noticed that since the format of the contact number corresponding to a person to inform is entered by the end user and as there is different recommendations, the uniformity is not guarantee (but it is required for enabling first responders to identify the person to inform).

Therefore, one object of the present invention is a method for creating information to be used in case of emergency, said information being intended to be stored in a telecommunication device memory and to be retrieved when required;
The method is **characterized in that** it comprises a controlling step for controlling that said information is created in a uniform specific manner and/or for ensuring said information is retrieved when required.

According particular implementations of the method, said controlling step may comprise a checking to determine if there is any information stored in a dedicated area and/or a checking to determine if there is any information complying with a predetermined format; said controlling may comprise an automatic data release communication to the device, said data forcing or assisting to create the information in a uniform specific manner.

According to an advantageous implementation, the method comprises a step of associating emergency information (EMI) to one or several emergency contact name(s) (ICE) in such a way that this emergency information (EMI) is provided automatically to a recipient or it becomes freely accessible to anyone, upon selection of at least one of said emergency contact name(s) (ICE) or associated phone number(s).

Another object of the invention is a computer program comprising instructions able to be executed in a data processing unit for carrying out above method.

Another object of the invention is a device or system for implementing the above method and/or for running above computer program, such as a telecommunication device (ME), a subscriber identification module (SIM), a server (SE) or a dongle.

In other words, the invention according to a preferred embodiment consists in a software agent on SIM Card that checks and/or pushes the uniform registration of an ICE number (or contact) and provides medical information (previously optionally configured by the user) before proposing to perform the call.

A program (agent) is preferably embedded in the SIM card. Its role will be, at a detected event, to check inside the SIM user phonebook if a name under the format "0yNNN...N" (y= {1, 2, 3...}, NNN...N: anything) has already been configured.

If the checking result is no, some message is displayed to the user, to explain the role / importance of such number and to propose its creation. If the user accepts, he will have either to enter a number or to select it through his current phonebook.

In complement, the program will propose him to enter some information (critical medical information, uncommon allergies...), he would like to share with first responders.

For ensuring retrieving of the information, following selection of this an ICE number (or ICE contact) in the phonebook, the program in the SIM may display the personal critical information before proceeding to the call.

Preferably, the invention provides means to ensure the information is delivered or recovered namely by duplicating it in any secure data storage such as a safe storage support or dedicated data base or in several memories even in the phone of a contact person or next-of-kin. Preferably, ICE Numbers and/or user information are duplicated or stored in "read always" SIM files (means not protected by PIN or keys) to allow, in case of SIM locked by PIN protection and handset off at the time of the accident to offer a way, via another external device to retrieve these data.

Others options could be to include in the SIM like an applet working without PIN and able to access such file. This could allow first responders to use any handset (on which they are familiar with the access to the SIM menu) to retrieve the information even if PIN unknown. Another option is to provide a data base server for retrieving information automatically when performing an emergency number with a mobile phone. This may namely prevent the case where next-of-kin does not respond.

### Brief description of the drawings

Other purposes, features and advantages of the invention will appear on reading the description which follows of the implementation of the method and system according to the invention, given as a non-limiting example, and referring to the attached drawings in which:
- Fig. 1 is a diagram illustrating a non-limiting communication network system used by the invention;
- Fig. 2 is a diagram of a SIM chip card structure used by the invention;
- Fig. 3 illustrates a table comprising events and corresponding conditions used in the control;
- Fig. 4 is a flow chart illustrating a first way to carry out the method according to the invention;
- Fig. 5 is a flow chart illustrating a second way to carry out the method according to the invention;
- Fig. 6 is a flow chart illustrating a third way to carry out the method according to the invention;
- Fig. 7 is a flow chart illustrating a way to retrieve the EMI information according to an embodiment of the invention.

### Detailed description:

In the following description the term ICE is preferably used to designate an emergency contact name or number whatever format it complies with, such as the recommended "ICE format" or "the format according to the E.123 recommendation". Nevertheless, ICE or EMI may also designate any information also.

In contrast, the term EMI will designate preferably any information associated to an emergency contact name or number as explained afterwards. Although used for creating and retrieving any information or data, the invention will be described in relation to emergency information although not limited to it.

This means that in the specification, emergency information or emergency data equals any data or information. The information may be any data but more specifically data related or linked to a person or an object, personal features, confidential data or data related to an object or family or friends. This data is a data which has been created by the user himself thanks to the method.

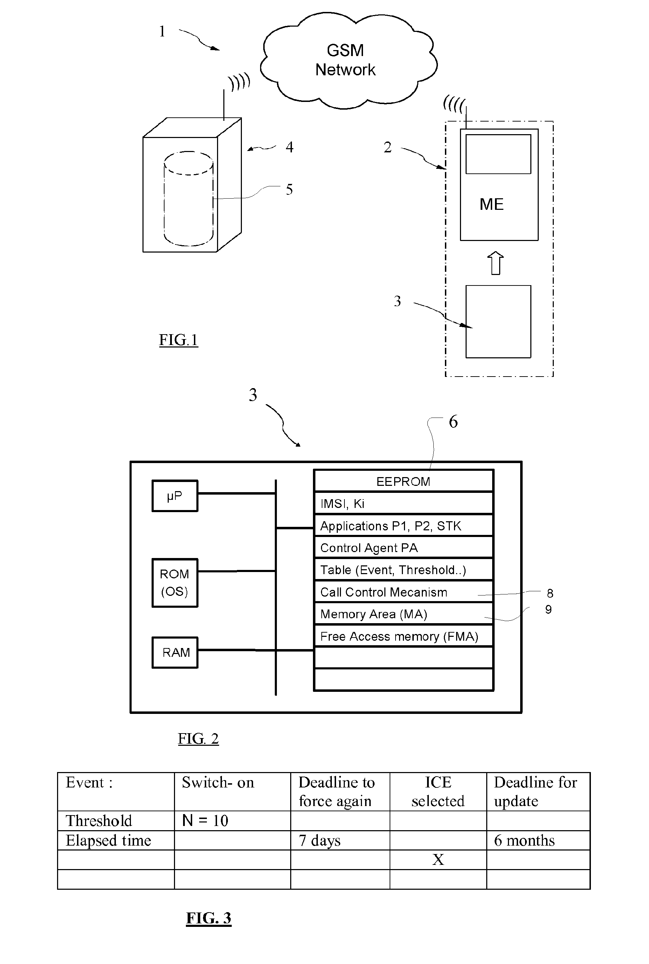

In FIG. 1, for the purpose of creating information to be retrieved when required namely by someone in case of emergency, in this example, the invention uses a telecommunication device memory used namely in a communication network system 1 for cellular communication appliances 2, referred to as a mobile ME hereinafter and functioning with a subscriber identification card 3 referred to as a SIM or (U)SIM. The device memory for storing the created information may be any kind of memory namely a memory of the card 3 or mobile device ME or memory 5 of a data server 4.

In the description, for facilitating the drafting and the understanding, emergency information or important information means also any information related to a user namely it could be only the ICE contact phone number.

In a known fashion, the network may be realized by any kind of networks such as GSM, GPRS, UMTS, WLAN, etc, type. The network may convey sophisticated multimedia data of the MMS type, or video or audio streams.

The system in the example, comprises preferably (although not compulsory) a server 4 connected to the telecommunication network. The communication may be done by a short message channel SMS. This server 4 may comprise in particular means 5 for storing information related to subscriber, means to automatically retrieve information in response to a call coming from the subscriber mobile ME or SIM card, means to store identifying means of the ME or SIM card, data processing means; means for identifying an emergency call coming from mobile ME or card, and retrieving information associated or corresponding to this emergency call number.

The system comprises a memory area MA intended to store information and /or list events which will be seen later. Events may also be in a table or register. This area MA is preferably in a chip of the card 3 for convenience, as in the example (FIG. 2). We will see afterwards that this area MA may be anywhere and on any close or remote memory support.

The electronic chip 3 of the subscriber identification card comprises, in a known manner, a processor (µp) connected via a data and control bus, to a program memory "ROM" comprising in particular an operating system "OS" for the card and specific algorithms, to a programmable memory 6 and to a random access memory RAM.

The programmable memory 6, in particular of the EEPROM or flash type comprises in particular data relating to the subscriber or data relating to his subscription with his associated enciphering key (IMSI, Ki) for authorising a communication service specific applications PA, P1, P2 related to the invention.

The card is able to cooperate with the mobile ME, which may for example be a telephone, a personal assistant PDA, a portable computer or other appliance provided with a communication function and interface.

According to one characteristic of the embodiment, the card comprises an application program (control agent "PA"), stored in its programmable memory and which is capable of detecting events ("number of switch-on" or an "elapsed time", etc.). The control agent "PA" is able to carry out the invention method as described afterwards.

The card may implement an application STK of the SIM toolkit type or equivalent, which means that it uses sets of commands in accordance with the recommendation GSM 11.14 enabling the card to be "proactive" in that it takes initiatives for directing in particular the mobile. During the execution of the program PA by the card processor, the card has itself taken over the exchanges with the mobile.

The card and / or the mobile may comprise preferably a call control mechanism 8 or equivalent, able to control a call selected in the phone book directory of the mobile or the card. Therefore, a call may be delayed and / or submitted to a specific condition defined in a table or register namely in the card.

The call control function complies with standard GSM 11.14. (Paragraph 4.5). Following this function, the handset must inform the SIM card (via an APDU command sent to the SIM, including the call number to perform); then in response to the received APDU command, the SIM has a possibility of requiring other operations of the handset (including or not this call).

This function makes it possible to give the hand to the SIM; here, an "applet" in the SIM will check if a stored number is equal to ICE number previously selected by the end user. If it is identical, the applet will be able to then ask to the handset the display of any information on the screen (specifically to retrieve previously created medical data). Then the agent (A) will let or ask to perform the call with this number after the displaying of the information.

In addition or alternatively to the memory area (9 also reference MA), the card preferably comprises also a free access memory area 10 (also reference FMA) for enabling a recovery or access of data without control access (PIN, password, etc.).

Although described for the card, some features or equivalent means may be provided in mobile or in a data storage device different from the card. In particular, the server may comprise a control agent controlling partly or totally in a remote fashion the creation and/or the retrieving of formation; The control may be made remotely namely with the help of card; For that, the card may be able to send report of actions made in the mobile or the card; The card investigates for identifying presence and/or conformity of information to a format of ICE contact number and send reports accordingly; the control may also simply be made by receiving all phone book number in a server which may be able to check the conformity.

The memory area comprises a table or a register (fig. 3), comprising at the head of the column events ("switch-on", "Deadline to force again", "ICE Selected", "Deadline for update" etc.). It comprises also, in the head of lines, corresponding conditions such as the "number of switch-on" of the mobile / card, a "number of hours or days", "If ICE is selected (X), ICE contact fulfilled or stored, etc.

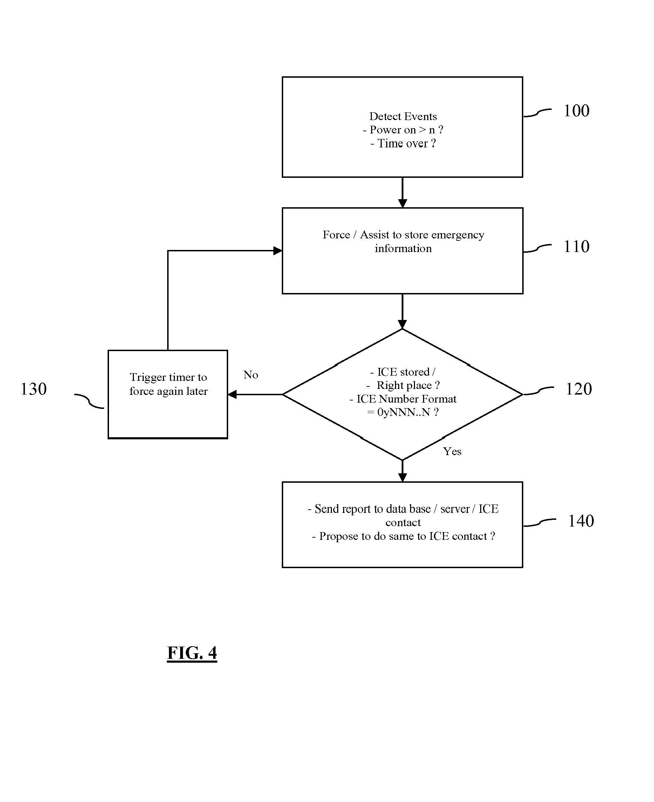

Figure 4 is illustrating a first embodiment of the method of the invention (or main step of an application program) for creating emergency information to be used in case of emergency, said information being intended to be stored in a telecommunication device memory and to be retrieved to someone in case of emergency.

In the following described flow charts, each step illustrated by a box may implement at least one or several of actions included in the box, in a cumulative or alternative way and in different order.

According to this example, the method comprises a controlling step for controlling that said information is created in a uniform specific manner and/or for retrieving said information to a recipient.

This controlling step may comprise namely a step 100 detecting an event which must be understood in a wide manner. The event may be any event as described above. The event is here a number of switch-on (N-switches). It may be preferably the time running after the activation of a telecommunication service.

For example, when a communication appliance or mobile comprising a subscriber identification card SIM, (U)SIM, which has just been inserted or reinserted, is switched on, it establishes a standard start-up procedure (not described). Any switch-on is count and a counter C is incremented untill reaching a determined threshold stored in the register or table of figure 3.

According to a feature of the invention, the method or program comprises a controlling step for controlling that said information is created in a uniform specific manner; the control may comprise an automatic data release carried out in response to the detection of an event.

According to a first embodiment, the controlling step, the automatic communication data release is done to the user through the telecommunication device, said data forcing or assisting the user to create the information in a uniform specific manner. This release may be done at any time.

For this purpose, in the example, each time the card has incremented the counter till the threshold, a comparative test is carried out consisting in seeking the value (N) in the table. When the counter reaches the threshold in response to a comparative test, the user is prompted at step 110 through a display on the screen of the mobile to force the subscriber to store emergency or important information. The display may be any kind of data.

Data comprises for example, explanation of the risks, incentives to do the registration, awareness on the stakes to have this information, a penalty or information about a possible penalty. The data may comprise also an assistance or guidance to do the storage of the information.

In the case of acceptance, the subscriber follows instruction on the screen and stores the information.

According to a second embodiment, the controlling step may comprise a checking of the information storage and/or a checking of the information format conformity, in a memory zone of the device.

In the example, the program then passes to step 120 to control by a test if the instruction given to the subscriber has been well followed or if there is no mistake. The test may detect if the information ICE namely is stored at the right place, in the phone book directory and / or whether it was done in a compulsory ICE format corresponding to 0yNNN...N.

The controlling step may also check whether the information ICE has been stored in a dedicated memory area (even in any format). But what is important is to ascertain that a dedicated area comprises information. Therefore, it is easy to seek always at the same area in order to retrieve the information. By forcing the storage in a dedicated area, the control is exercised on the data storage location.

Preferably dedicated area means that only the information (ICE or EMI) is stored in this area (not together with other information which is not important or not related to the user like other phone contact in a phone book directory). The effect of this feature is for enabling a quick way to find the information by someone. In one embodiment this information must be isolated from the other in the sense that no mistake may happen when retrieving the information is required. This could be done by having only one file in a memory area or only one dedicated folder in a memory area.

In case, there is no information anywhere, or not in the good format, the program links to step 130 to trigger a timer in order to force subscriber later (later means from one second to days or months).

After time over, the program links to step 110 to force again the subscriber as described previously or by adding something else more persuasive (incentive or penalty).

According to an embodiment, in case, the result of above test 120 is yes (information present and/or in good format), the program goes to step 140 where a report is sent to a data base namely server.

The report may also be stored and sent later; it may also be sent to the mobile corresponding to the contact ICE chosen by the subscriber just for information.

The telecom service provider may apply an incentive, namely a bonus or discount in response to a positive or favourable report.

Therefore, by this way, forcing the creation, forcing the location, the format, the telecom service operator may control most of the step leading to the creation of the ICE information. The invention gives means to the operator in order for him to control that the creation of ICE information is done and correctly done in the good format. Thanks to that, the retrieving of information has a better chance to be done correctly and efficiently. This is also a way to ensure a retrieving.

The sent report may also propose to the person designed as ICE contact to do the same, i.e. storing ICE information, and so on like a chain in order to deploy quickly the creation of information.

Alternatively or in addition, the controlling step may also control retrieving said information to anyone or a predefined recipient. As already said, control of retrieving may be achieved if the information is well stored namely always at same place or in memory area in the sense that the invention controls the way that said information is easily found by the first responder.

The invention enables also to submit the retrieving of the information through control conditions exposed afterwards.

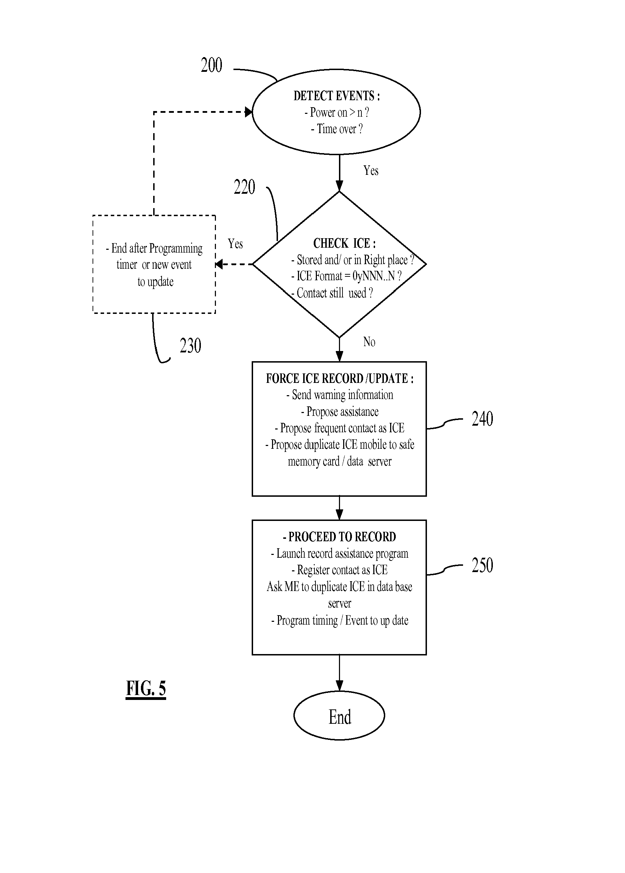

At figure 5, a flow chart illustrates another way to carry out the method according to a second embodiment; the program starts directly at step 200 by a test to detect an "EVENT" such as time overdue.

In the example, the event may be deduced by the program itself since at step 230 a timer was previously triggered or a new event programmed in table or register of figure 3, to force again later.

After that, the program connects itself to step 220, which is at least same as 220 of figure 4, for checking ICE conformity.

If the test result is "yes" (ICE information correct and contact number still used or frequently used), then the program goes to step 230 for forcing again later or for updating purpose. The agent may comprise therefore, a program to check whether the ICE number is often used or no more used since a long time. This is an indication for the control means (agent) to propose or program an update of the contact.
Therefore, the invention may also control that the ICE number is also a number which is frequently in operation in order to ensure to contact someone in case of emergency.

In case, result is "no", (ICE no correct...) or next-of-kin contact number no more used, the program executes a step 240 similar to step 110 for forcing ICE recording or updating.

In case the user agrees, the program achieves step 250 to proceed to ICE record by launching a record assistance program and/or by registering a contact as ICE and/or by proposing assistance and/or by asking mobile ME to duplicate information EMI in the data base server and/or by programming a timer or an event to update.

The storing may be made in a safe recording area such as in a card or in a server data base, or any where, such as in the mobile terminal of the user or one or more contact person.

Following an improvement, the invention may exercise its control by proposing also to duplicate or store the ICE number in another standardized format or different standardized format in force (among several formats existing for example in different countries) or in the phone book or in a different place from the phone book. Therefore, the first responders are sure to recognize at least a usual format for the emergency number.

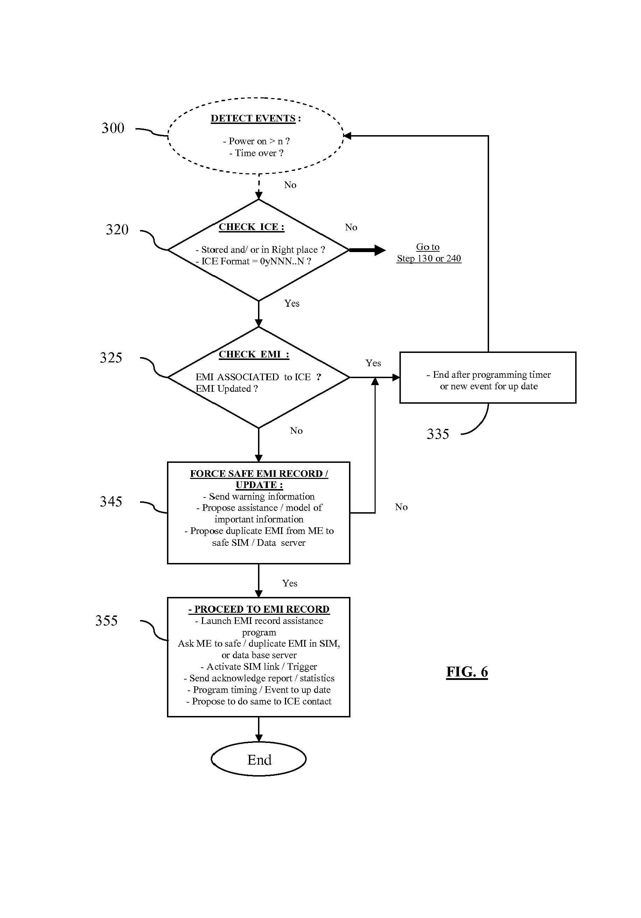

At figure 6, another embodiment of the method will be described thereafter in relation to illustrated flow chart of a program application for creating any information storage in case of emergency (EMI) or important event.

In the example, the information comprises or consists in an ICE number.

According to a feature, of the embodiment, the method comprises appearing emergency information to one or several ICE number(s) in such a way that this information is provided automatically to a person or it becomes freely accessible to anyone, upon selection of at least one of said emergency number. The information may also be freely accessible since it is duplicated or stored in "a read always" memory file to allow a free access to the information at any time.

To carry out that, the program may start at step 300 by detecting an event as previously explained. Then after, the program includes a checking step 330 to check whether ICE contact is there and in conformity like in step 220 of fig. 4.

If test result is "no" (lack of ICE or no conformity), the program connects to a sub-program in step 130 or 240 of previous figures to force ICE contact creation / registration.

In case of no conformity, (test result "yes"), the program connects to completely new test (325) to check whether any information EMI is associated to ICE number or whether EMI requires an update (depending for example on time elapsed status and/or events recorded).

In case, result is "yes" (information yet associated to an ICE number) the program ends (335) after programming an update or new event for wake up the program of this figure 4.

In the contrary (EMI not associated), a new step 345 is activated in which the program forces safe EMI record / update by following actions:
- Send warning information, and/or
- Propose assistance / model of important information, and/or
- Propose duplicate EMI from ME to safe SIM / Data server or any dongle.

In case user accepts any one of proposal in step 345, then the user is guided at step 355 to "proceed to EMI record" by the following action:
- Launch EMI record assistance program; and/or
- Ask ME to safe record / duplicate EMI in SIM or data base server; and/or
- Activate a SIM link or a trigger means (namely said "call control mechanism") in order to directly retrieve EMI information when ICE contact number is performed or selected in mobile. For this, a flag may be added in a register to force mobile processing means to consult or instruct SIM card to retrieve EMI information before performing the ICE number.

Therefore, above means enable to implement a preliminary step to control the retrieving of the information. The control in retrieving may be or not activated and may consist in postponing the call corresponding to the ICE number as long as retrieving information is not completed. The control may also involve means to postpone the call performing untill the reception of an acknowledge receipt of the supplied information.

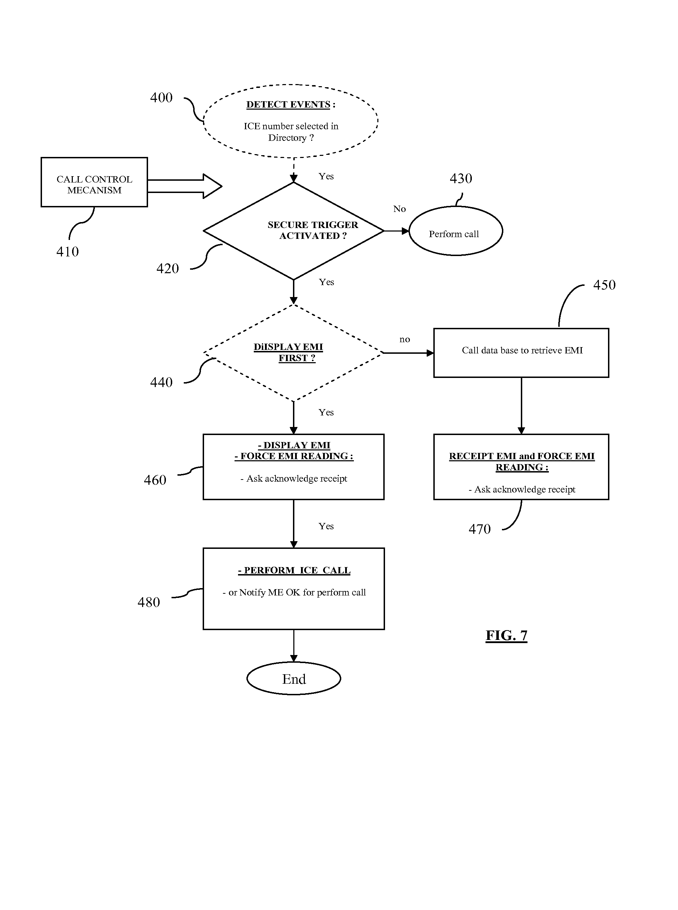

Thanks to above features, the invention enables to control and ensure a good delivery of any important information in addition to a good recording of the information, at a wide scale.
Step 355 may also comprise the following actions:
- Send acknowledges receipt / report for statistics purpose; and/or
- Program time or an event to update; and/or
- Propose to alert or inform ICE contact of this recording and/or propose contact person to do same in his side (to produce a chain reaction effect); and/or
- Propose user to secure the retrieving by carrying out the retrieving or supplying the information on the device in any case; this happens namely in case the performed call does not succeed and/or in case an acknowledge receipt of the information retrieved to a remote recipient of the call is not received. (This function will be explained with respect to figure 7)

Figure 7 represents a flow-chart illustrating main steps of the method according to a particular way to carry it out and/or corresponding to main steps of a specific program for implementing the delivery or retrieving of an information (EMI).

The program or method may start at step 400 by detecting an event namely detecting that at least an ICE contact or number is going to be performed in the mobile terminal since it was selected by a first responder. The mobile in the example, has sent to the SIM card, an APDU command including the call number and/ or contact name (01 Spouse) to perform since the call control function was activated previously. (The call control function may be activated by default)

In other variant, the device comprises means (sensors) to detect a violent chock, or hostile environment. In that case, the EMI information (or ICE name + phone number) may be displayed automatically.

Since, at step 400, the SIM has detected the ICE number, there could be a non compulsory test running to know whether secure means (secure trigger) is activated or not (test 420). These secure means enables the user to choose whether the EMI information has to be displayed first or after performing the call.

In case security means are not activated, the call is performed first (430) and only after, there may be a release of EMI information. The card asks ME to display the information after the call.

In case, security trigger means (or equivalent such as locking, call control mechanism) are directly activated (This mechanism may be activated by default), the EMI information is displayed first on terminal (step 460) and/or communicated in an audio manner. The program then preferably forces or ensures the reading of the EMI of information is well done namely by asking an acknowledge receipt (460) by pressing a key on the keyboard. In other case, the EMI may only be displayed directly once the ICE number is selected.

At step 480, as soon as the acknowledgement is done, the card sends a message to ME to allow or let the mobile ME perform the ICE call number, namely by sending a message to the mobile data processing means.

At step 440, there could be a non compulsory test to know if EMI is to be directly displayed; it enables to know whether EMI is to be displayed first or if a data base will be called. EMI will not be displayed before the call being performed when it is stored outside, namely in a secure data base server. Therefore it is required to perform a call first since the ICE number corresponds to a server number.
The user may also not desire that confidential information be retrieved to anybody from the server; therefore, the information may be communicated to a predetermined recipient from the server.

In response (step 450), the server identifies the subscriber through an identification number (IMEI) of the mobile and/or the SIM, send EMI information to the mobile; at EMI reception, the program may force the reading of the information (step 470) by the first responder or by a chosen recipient namely by asking him an acknowledge receipt.

The method may also provide a default mode for retrieving information on the device in case the call to the server does not succeed and/or in case an acknowledge receipt of the information retrieved is not received from the recipient of the call.

At step 480, once the card received the acknowledge receipt, it sends a message to the mobile to allow performing the call.

These flow-charts illustrates main steps of a specific secure program loaded in an EEPROM or preferably stored at least in part in a secure object like SIM card, or server.

The agent program may preferably be embedded in the SIM card at the SIM card personalisation or can be downloaded in the SIM card over the air.

In alternative, emergency information EMI may be associated to one or several ICE number(s) in such a way that this information is provided automatically to a person or it becomes freely accessible to anyone, upon selection of at least one of said emergency number.

Alternatively, the agent can be embedded in mobile device itself, allowing storage of more information (including user picture) and management of ICE numbers in handset phonebook. Nevertheless, storage in SIM card is recommended as changes of mobile are more frequent than SIM changes (and handset can be broken during the accident, not the case of the SIM card, or have no battery anymore).

In a variant, the method may provide a key to be activated on the key board in case of emergency, and the activation cause the EMI information to be displayed or communicated to a recipient. The key activation may also perform a call to alert some one and the display may be made after or before the call depending on how is configured the device or the call control function.

The method may also provide means to distinguish an emergency call to a next if kin from normal call since the same phone number is performed.

This may be achieved namely by the following steps. In case of emergency, the mobile performs the call with same number but it may add a signal or message to inform the recipient that it is an emergency call. For example, a DTMF tone, a message through SMS.

The mobile of the recipient may comprise a program for analysing the message and deducing from the signal or the message that it is really an emergency call. The recipient mobile may also comprise means to detect this event (urgent signal received) and take one of the actions previously described in response to an emergency call (namely propose to send an acknowledge receipt or send corresponding information EMI stored or duplicated in the recipient mobile). These functions may be implemented with additional computer programs P2, P2 (applet / midlet) stored in the memory 6 or device ME.

### Other advantages:

- Initiative to enter the ICE number doesn't come from user anymore;
- Guarantee uniform format to ease ICE number identification;
- Some basic essential medical information can be provided through the device interface;
- Easy deployment since there is no need of strong communication campaign, at the level of a country, only operators to convince to embed the agent in the SIM card;
- Penetration rate will increase quickly once supported by one or two operators in a country. Therefore it will become a reflex for first responders.

## Claims

1. Method for creating information to be used namely in case of emergency, said information being intended to be stored in a telecommunication device memory and to be retrieved when required,
**characterized in that** it comprises a controlling step (200, 220, 320) for controlling that said information (ICE, EMI) is created in a uniform specific manner and/or for ensuring said information is retrieved when required.

2. Method according to claim 1, **characterized in that** said controlling step comprises a checking to determine if there is information (ICE, EMI) stored in a dedicated area and/or a checking to determine if there is information complying to a predetermined format.

3. Method according to the claim 1 or 2, **characterized in that** said controlling step comprises an automatic data release communication (110) to the device, said data forcing or assisting the user to create the information in a uniform specific manner.

4. Method according to the preceding claim, **characterized in that** said automatic release is carried out in response to the detection (100, 200) of an event chosen among:
- Number of device switching-on,
- Time running out after telecommunication service activation.

5. Method according to anyone of preceding claims, **characterized in that** said information comprises an emergency contact name (ICE) complying to a recommended format such as the "ICE format" or "E.123 recommendation" format.

6. Method according to anyone of preceding claims, **characterized in that** it comprises a step for associating emergency information (EMI) to one or several emergency contact name(s) (ICE) in such a way that this emergency information (EMI) is provided automatically to a recipient or it becomes freely accessible to anyone, upon selection of at least one of said emergency contact name(s) (ICE) or associated phone number.

7. Method according to the preceding claim, **characterized in that** said controlling implements a step for delaying the call corresponding to the emergency contact name(s) (ICE), as long as retrieving of said emergency information is not completed and/or that an acknowledge receipt (460) of the supplied emergency information (EMI) is not received from the recipient of the information.

8. Method according to anyone of the preceding claims, **characterized in that** said information (ICE, EMI) is duplicated or stored (345) in "a read always" memory file to allow a free access to the information.

9. Computer program (PA) comprising instructions able to be executed in a data processing unit for carrying out the method steps according to any one of the preceding claims.

10. Device or system implementing the method according to anyone of claims 1 to 8 and/or comprising the computer program according to claim 9 such as a telecommunication device (ME), a subscriber identification module (SIM), a server (SE) and a dongle.
